# EUROPÄISCHE PATENTSCHRIFT

(11) **EP 2 499 070 B1**
(45) Veröffentlichungstag und Bekanntmachung des Hinweises auf die Patenterteilung: **08.01.2014**
(21) Anmeldenummer: 10779251.7
(22) Anmeldetag: 09.11.2010
(51) Int. Cl.: B65G 23/14

(54) **FÖRDEREINRICHTUNG**
CONVEYING UNIT
DISPOSITIF DE TRANSPORT

(30) Priorität: 12.11.2009 DE 102009052985
(43) Veröffentlichungstag der Anmeldung: 19.09.2012
(73) Patentinhaber: Technische Universität Chemnitz, 09111 Chemnitz (DE)
(72) Erfinder: NENDEL, Klaus, 09569 Oederan (DE); SUBBERT, Sindy, 09113 Chemnitz (DE); MEYNERTS, Peter, 09224 Grüna (DE)
(74) Vertreter: Grünecker, Kinkeldey, Stockmair & Schwanhäusser
(86) Internationale Anmeldenummer: PCT/EP2010/006827
(87) Internationale Veröffentlichungsnummer: WO 2011/057763

(56) Entgegenhaltungen:
- EP-A1- 1 900 656
- WO-A1-2004/043834
- WO-A1-2006/137483
- FR-A1- 2 307 729
- GB-A- 2 337 973
- US-A- 2 732 059
- US-A- 2 759 595

## Beschreibung

Die vorliegende Erfindung betrifft eine Fördereinrichtung mit einer Trageinrichtung, die eine Mitnehmereinrichtung aufweist, die sich im Wesentlichen in Bewegungsrichtung der Trageinrichtung erstreckt und durch einen Antrieb bewegbar ist.

Eine entsprechende Trageinrichtung wird in Stetig-Fördersystemen verwendet, wobei beispielsweise bei Bandförderern die Übertragung des Drehmomentes von einer Antriebstrommel auf der Laufseite der Fördergurte durch Reibkräfte, d.h. kraftschlüssig, erfolgt. Bei einem derartigen Antrieb ist ein gewisser Schlupf nicht vermeidbar. Voraussetzung für die sichere Mitnahme des Fördergurtes als Trageinrichtung ist dessen ausreichende Vorspannung. Zur Aufnahme der Gurtvorspannkraft ist jedoch eine entsprechend stabile Gestellkonstruktion für die Fördereinrichtung notwendig.

In sogenannten Kettenfördersystemen, wie z.B. in Mattenkettenförderern, erfolgt die Übertragung des Antriebsmoments durch den formschlüssigen Eingriff der Kettenräder in die einzelnen Glieder der Kette. Ein Schlupf ist hier ausgeschlossen. Ein Nachteil bei derartigen Kettensystemen ist der sogenannte Polygoneffekt beim formschlüssigen Eingriff und dies bedeutet, dass es infolge des polygonartigen Umschlingens der starren Kettenglieder um das verzahnte Kettenrad und damit verbundenen momentanen Verschiebung des Eingriffsradius zu Geschwindigkeitsschwankungen in der Förderkette kommt. Alternativ zu den vorangehenden Fördereinrichtungen ist es bekannt in einem flurfreien Hängefördersystem untereinander gekoppelte Wagen bzw rollend geführte Zugelemente durch beidseitig angreifende Reibräder kraftschlüssig anzutreiben. Hierbei werden die Wagen entweder gezogen oder geschoben. Bei einem derartigen Reibradantrieb sind neben dem Schlupf auch die begrenzte Anpresskraft und der erhöhte Verschleiß an den Reibrädern nachteilig.

Weiterhin sind im Stand der Technik sogenannte Direktantriebe für die Trageinrichtung bekannt. Bei derartigen Direktantrieben erfolgt die Krafteinleitung nicht über Antriebstrommeln, Räder bzw. Kettenräder, sondern es wird an der Unterseite eines Tragriemens ein Flachriemen an die Fläche angedrückt, wobei die Kraftübertragung reibschlüssig erfolgt. Um diese reibschlüssige Kraftübertragung zu realisieren, ist eine entsprechende Normalkraft zwischen dem Tragriemen und dem Antriebsriemen erforderlich. Diese Normalkraft wird dadurch aufgebracht, dass der Antriebsriemen gegen den Tragriemen gedrückt wird. Bei einem derartigen Antrieb ist es nachteilig, dass die Normalkräfte durch Vorspannung im Tragriemen und einer entsprechenden Gestellausgestaltung abgestützt werden müssen.

Zur Überwindung langer Achsabstände, bei großen Hubhöhen und großen Fördergutströmen, ist es bekannt, zur Unterstützung von Trommelantrieben zusätzlich formschlüssige oder kraftschlüssige Antriebe als Zwischenantriebe einzusetzen. Bei derartigen Anordnungen besteht das Problem, die Antriebe zu synchronisieren und entsprechende Dehnungsdifferenzen auszugleichen. Weiterhin ist der Bereich zur Leistungsübertragung begrenzt.

Aus der Druckschrift DE 9 103 775 U1 ist ein Zwischenantrieb für Bandförderanlagen bekannt. Gemäß dieser technischen Lehre wird vorgeschlagen, einen magnetisierbaren Traggurt durch einen permanentmagnetischen Treibgurt anzutreiben. Hierbei wird der Treibgurt an der Unterseite des Traggurtes in flächigen Kontakt positioniert, und die zur Reibkraftübertragung notwendige Normalkraft wird mit Hilfe der magnetischen Anziehung unterstützt.

Aus der Druckschrift DE 10 219 818 A1 ist ein magnetisch gelagerter Transportwagen mit berührungslosem Antrieb durch Linearmotoren bekannt. Bei dieser Lösung erfolgt eine reibungsarme Lagerung des Transportwagens. Die Verwendung dieses Antriebsprinzips für Fördereinrichtungen mit Gurten oder Ketten ist jedoch wegen des geringen Wirkungsgrades wirtschaftlich nicht umsetzbar.

Aus der EP 1900 656 A1 ist eine weitere Fördereinrichtung bekannt.

Eine Fördereinrichtung nach Oberbegriff des Anspruches 1 ist aus der GB 2 337 973 A bekannt.

Es ist die Aufgabe der vorliegenden Erfindung, eine Fördereinrichtung mit einer Trageinrichtung, die eine Mitnehmereinrichtung aufweist, die sich im Wesentlichen in Bewegungsrichtung der Trageinrichtung erstreckt, und durch einen Antrieb bewegbar ist, zu schaffen, wobei die Trageinrichtung mit geringem Schlupf und einfachem Gesamtaufbau der Fördereinrichtung antreibbar ist.

Diese Aufgabe wird erfindungsgemäß gelöst durch eine Fördereinrichtung mit einer Trageeinrichtung mit den Merkmalen des unabhängigen Patentanspruchs 1. Bevorzugte Weiterbildungen sind in den Unteransprüchen dargelegt.

Nachfolgend wird die vorliegende Erfindung anhand von Ausführungsformen mit Bezug auf die beigefügten Zeichnungen näher beschrieben und erläutert. Die Zeichnungen zeigen:
- Fig. 1A: eine erste Ausführungsform der Fördereinrichtung als Bandförderer mit Direktantrieb durch Magnetzahnriemen;
- Fig. 1B: eine zweite Ausführungsform der Fördereinrichtung als Kettenförderer mit einem Direktantrieb durch Magnetzahnriemen;
- Fig. 2: eine Detailansicht des Direktantriebs der Fördereinrichtung gemäß Fig. 1A;
- Fig. 3: eine Detailansicht der Fördereinrichtung gemäß Fig. 1B;
- Fig. 4: eine dritte Ausführungsform der Fördereinrichtung als Hängeförderer mit geklemmter Zug- und Schubstange; und
- Fig. 5: eine vierte Ausführungsform der Fördereinrichtung mit einem formschlüssigen Direktantrieb durch Magnetzahnriemen.
- Fig. 6a: eine fünfte Ausführungsform der Fördereinrichtung mit einem teilweisen, formschlüssigen Direktantrieb durch Magnetzahnriemen.
- Fig. 6b: eine sechste Ausführungsform der Fördereinrichtung mit einem teilweisen, formschlüssigen Direktantrieb durch Magnetzahnriemen.

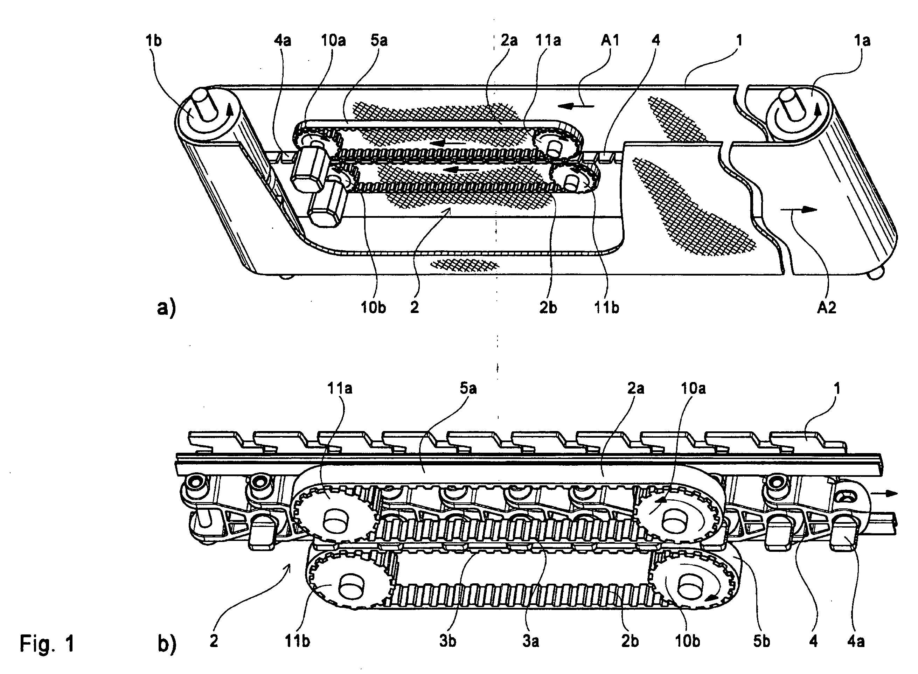

Fig. 1a zeigt eine erste Ausführungsform der Fördereinrichtung in einer Trageinrichtung 1, die als Traggurt oder Tragband ausgebildet ist. Dieser Gurt wird auf zwei Rollen 1a, 1b gelagert und durch einen Antrieb 2 in der vorgegebenen Prozessrichtung A1, A2 bewegt. An der Unterseite des Traggurtes 1 ist eine Mitnehmereinrichtung 4 angeordnet. In dem gezeigten Ausführungsbeispiel ist diese Mitnehmereinrichtung 4 im Wesentlichen in der Mitte bezüglich der Breitenerstreckung des Traggurtes 1 angeordnet. Diese Mitnehmereinrichtung 4 besteht aus einer Mehrzahl von Mitnehmerelementen, die an der Unterseite des Traggurtes 1 befestigt sind. Zwischen diesen Elementen ist ein Abstand vorgesehen, der sich in dem gezeigten Ausführungsbeispiel von der Unterseite des Traggurts 1 ausgehend erweitert, so dass eine Krümmung des Traggurtes 1 um die Rollen 1 a, 1 b möglich ist. Zur Führung dieser Mitnehmereinrichtung 4 ist jeweils eine Ausnehmung bzw. eine Nut an den Tragrollen 1a, 1b ausgebildet.

Der Antrieb 2 umfasst zwei Antriebsriemen 2a, 2b, die in der gezeigten Ausführungsform als Zahnriemen (Magnetzahnriemen) ausgebildet sind. Diese Antriebsriemen 2a, 2b werden durch die Antriebsräder 10a, 10b angetrieben und durch die Führungsräder 11a, 11b geführt. In der gezeigten Ausführungsform sind die Antriebsräder 10a, 10b als Antriebszahnräder und die Führungsräder 11a, 11b als Führungszahnräder ausgebildet. Die Antriebsriemen 2a, 2b erstrecken sich im Wesentlichen parallel zu der Mitnehmereinrichtung 4, wobei die umlaufenden Antriebsriemen 2a, 2b jeweils einen entsprechenden Zugabschnitt 3a, 3b aufweisen. Die Mitnehmereinrichtung 4 erstreckt sich in dem Bereich zwischen diesen Zugabschnitten 3a, 3b. Die umlaufenden Antriebsriemen 2a, 2b weisen jeweils umlaufende Klemmflächen 5a, 5b auf, die in dem Bereich der Zugabschnitte 3a, 3b der Antriebsriemen 2a, 2b einander gegenüberliegend, zu der Mitnehmereinrichtung 4 gerichtet sind. -

Die Mitnehmereinrichtung 4 weist auf den jeweiligen Elementen ebenfalls gegenüberliegende Klemmflächen 4a, 4b auf, die somit den jeweiligen Klemmflächen 5a, 5b an den Zugabschnitten 3a, 3b der Antriebsriemen 2a, 2b zugewandt sind.

In der gezeigten Ausführungsform ist der Antrieb 2 im Wesentlichen symmetrisch bezüglich einer Ebene ausgebildet, sich im Wesentlichen senkrecht zu dem Traggurt 1 erstreckt und in der sich die Mitnehmereinrichtung 4 befindet. In der gezeigten Ausführungsform werden die Antriebszahnräder 10a, 10b getrennt voneinander durch Elektromotoren angetrieben. Alternativ zu dieser Ausgestaltung kann auch ein gekoppelter Antrieb für beide Antriebszahnräder verwendet werden.

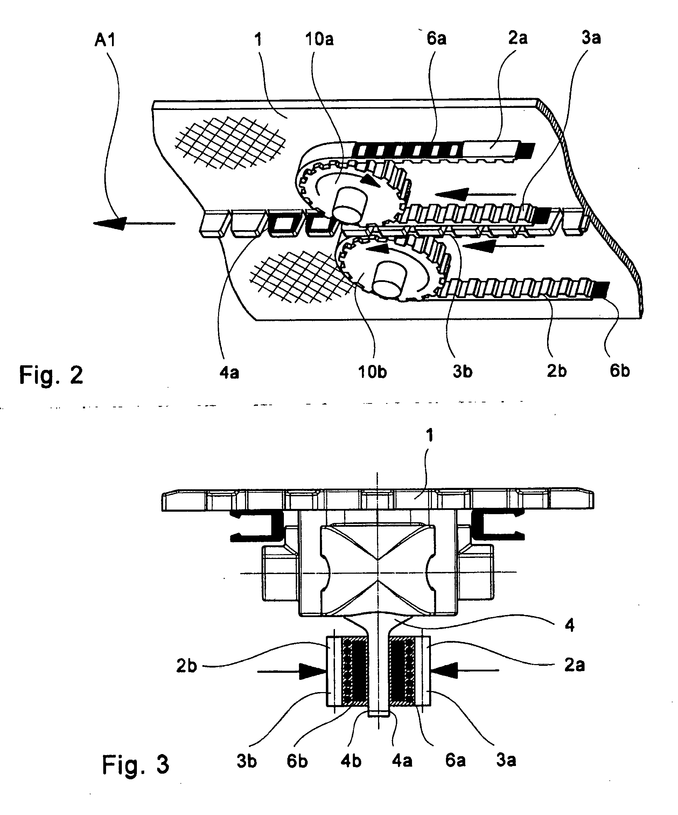

In der gezeigten Ausführungsform sind die Antriebsriemen 2a, 2b jeweils mit einer umlaufenden Magneteinrichtung (umlaufender Magnet) 6a, 6b ausgebildet, wie dies in der Fig. 2 gezeigt ist. In einer Ausgestaltung ist dieser umlaufende Magnet 6a, 6b als Elektromagnet ausgebildet. Die umlaufenden Elektromagneten 6a, 6b sind derart ausgestaltet, dass im Bereich der Zugabschnitte der Riemen, d.h. mit Bezug auf die Mitnehmereinrichtung 4, eine entgegengesetzte Polung der Magnetfelder vorliegt. In einer alternativen Ausgestaltung enthält die Magneteinrichtung miteinander gekoppelte Magnete, die eine magnetische Kette bilden, die von einem Kunststoff umschlossen sind. Bei einer alternativen Ausgestaltung mit einzelnen von einander getrennten Magnete, sind diese in das Riemengrundmaterial, wie z.B. Gummi, eingelagert.

Im Betrieb der gezeigten Ausführungsform werden die umlaufenden Elektromagnete 6a, 6b in entsprechender Weise elektrisch aktiviert, so dass die Magnetfelder im Bereich der Zugabschnitte 3a, 3b mit entgegen gesetzter Polung aufeinander wirken und die Zugabschnitte 3a, 3b der Antriebsriemen 2a, 2b aufeinander ziehen. Diese magnetische Kraft bewirkt, dass die Klemmflächen 5a, 5b der Antriebsriemen 2a, 2b mit den jeweiligen Klemmflächen 4a, 4b der Mitnehmereinrichtung 4 in Kontakt kommen und auf diese gedrückt werden, derart, dass eine kraftschlüssige Verbindung entsteht. Durch die spezielle Gestaltung der Oberflächen der Klemmflächen 4a, 4b, 5a, 5b ergibt sich durch die magnetische Kraft, die senkrecht zu den Klemmflächen 4a, 4b, 5a, 5b gerichtet ist, eine entsprechende Reibkraft, wobei sich die entgegen gesetzten Klemmkräfte, d.h. die Normalkräfte der Zugabschnitte 3a, 3b, sich auf der Mitnehmereinrichtung 4 in entgegengesetzten Richtungen abstützen.

Beim Antrieb der Antriebszahnräder 10a, 10b werden die Antriebsriemen 2a, 2b umlaufend bewegt, so dass die Zugabschnitte 3a, 3b in Bewegungsrichtung A1, A2 des Traggurtes 1 bewegt werden und aufgrund der Klemmkraft der Antriebsriemen 2a, 2b auf die Mitnehmereinrichtung 4, im Bereich der Zugabschnitte 3a, 3b, wird der Traggurt 1 in die vorgegebene Bewegungsrichtung A1 bewegt. Hierdurch wird eine Fördereinrichtung mit einem Antrieb zur Verfügung gestellt, die ohne Schlupf und ohne unerwünschten Polygoneffekt arbeitet, wobei ein geringer Verschleiß der entsprechenden Elemente vorliegt. Die reibschlüssige bzw. kraftschlüssige Verbindung zwischen den Antriebsriemen 2a, 2b und der Mitnehmereinrichtung 4 wird durch die magnetische Kraft bestimmt, welche die Antriebsriemen 2a, 2b aufeinander ausüben, wobei diese Kräfte durch die Mitnehmereinrichtung 4 momentenfrei abgestützt werden, so dass durch diese magnetischen Kräfte keine Auswirkungen oder zusätzliche Belastungen für das Gestell der Fördereinrichtung auftreten.

Alternativ zu dem gezeigten Ausführungsbeispiel, bei dem beide Antriebsriemen einen umlaufenden Magneten aufweisen, kann der Antrieb auch derart ausgeführt werden, dass nur einer der Antriebsriemen in einem umlaufenden Magneten ausgebildet ist, wobei der gegenüberliegende Antriebsriemen derart ausgebildet ist, dass er durch die magnetische Kraft angezogen wird. Bei der Verwendung eines Elektromagneten als umlaufenden Magneten in einen der Antriebsriemen ist somit eine entsprechende Stromversorgung für nur einen der Antriebsriemen notwendig, wobei der weitere Antriebsriemen beispielsweise Metalleinlagen enthält, um so die Antriebsriemen im Bereich der Zugabschnitte aufeinander zuzubewegen und die Mitnehmereinrichtung festzuklemmen.

Gemäß einer weiteren, nicht im Detail dargestellten Variante der ersten Ausführungsform weist einer der Antriebsriemen eine Mehrzahl von Magneten auf und der gegenüberliegende Antriebsriemen wird durch die Magnete angezogen, wobei die Mitnehmereinrichtung durch die umlaufenden Klemmflächen der Antriebsriemen festgeklemmt wird. Bei dieser Variante können die Magnete in dem einen Antriebsriemen mit gleichgerichteter oder wechselnder Polung angeordnet werden. Alternativ zu dieser Variante können auch beide Antriebsriemen eine Mehrzahl von Magneten aufweisen, die sich gemäß der Polung einander anziehen. Hierbei können die Magnete in dem einen Antriebsriemen in gleichgerichteter Polung angeordnet werden, wobei die Magnete in dem gegenüberliegenden Antriebsriemen ebenfalls in gleichgerichteter Polung zueinander, jedoch in entgegen gesetzter Polung zu dem erstgenannten Antriebsriemen angeordnet sind. Als Alternative zu dieser Variante können die Magnete in den genannten Antriebsriemen jeweils mit wechselnder Polung angeordnet werden. Bei dieser Variante werden die Antriebsriemen in dem Antrieb in Antriebsrichtung derart positioniert, dass im Bereich der Zugabschnitte jeweils Magnete mit entgegengesetzter Polung gegenüberliegen, so dass sich die Antriebsriemen gegenseitig anziehen und die Mitnehmereinrichtung festklemmen.

In den vorangehenden Ausführungsformen sowie den genannten Varianten können sowohl Permanentmagnete als auch Elektromagnete zum Einsatz kommen.

In der Fig. 1b wird eine zweite Ausführungsform der Fördereinrichtung dargestellt, wobei der Antrieb 2 im Wesentlichen dem Antrieb der ersten Ausführungsform gemäß der Fig. 1a und 2 entspricht. Nachfolgend werden daher nur die wesentlichen Unterschiede der zweiten Ausführungsform mit Bezug auf die erste Ausführungsform und deren Varianten erläutert. Bei der zweiten Ausführungsform wird ein Kettenförderer als Trageinrichtung 1 verwendet und die Mitnehmereinrichtung 4 wird durch die Mehrzahl von Elementen gebildet, wobei jedem Kettenglied des Kettenförderers ein Mitnehmerelement zugeordnet bzw. an diesem befestigt ist, wie dies in der Fig. 1 B dargestellt ist. Diese Elemente weisen, ähnlich wie in der Ausführungsform gemäß Fig. 1A, entsprechende Klemmflächen 4a, 4b auf und die gegenüberliegenden Zugabschnitte 3a, 3b der Antriebsriemen 2a, 2b werden mit ihren Klemmflächen 5a, 5b durch die magnetische Kraft auf die Klemmflächen 4a, 4b der Mitnehmereinrichtung 4 gedrückt, und der Kettenförderer wird durch die entsprechende Antriebsbewegung der Antriebszahnräder 10a, 10b bewegt.

In der Fig. 3 ist eine Schnittdarstellung der zweiten Ausführungsform gezeigt, wobei die Variante mit zwei Antriebsriemen 2a, 2b, die jeweils einen umlaufenden Elektromagneten 6a, 6b aufweisen, dargestellt ist.

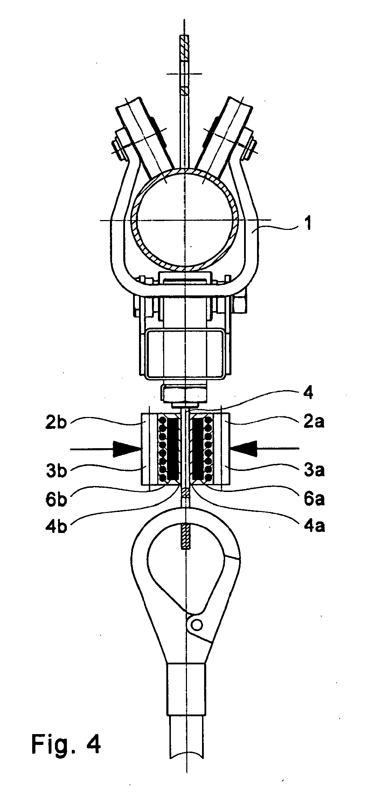

In Fig. 4 ist eine weitere Ausführungsform der Fördereinrichtung als Hängeförderer dargestellt, wobei der Antrieb 2 im Wesentlichen dem Antrieb gemäß der Fig. 3 entspricht.

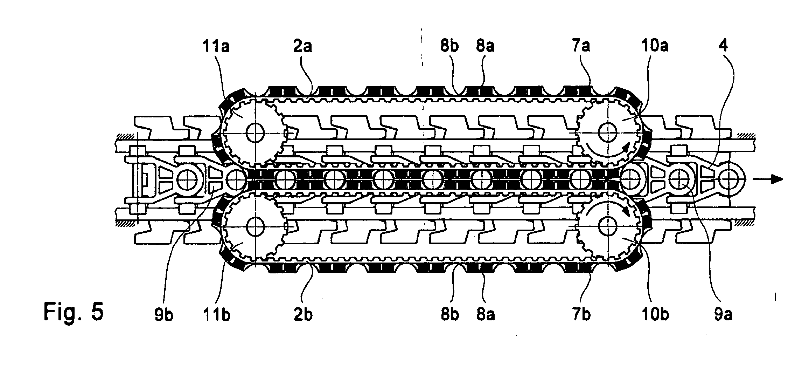

Fig. 5 zeigt eine vierte Ausführungsform der Fördereinrichtung mit einer Trageinrichtung 1, die als Kettenförderer ausgebildet ist, wobei dieser Kettenförderer ähnlich der zweiten Ausführungsform gemäß Fig. 1 B ausgebildet ist. Gemäß der vierten Ausführungsform nach Fig. 5 weisen die zwei einander gegenüberliegenden Antriebsriemen 2a, 2b eine Mehrzahl von gleichverteilten Vorsprüngen 8a auf, wobei entsprechend gleichverteilte Ausnehmungen 8b zwischen den Vorsprüngen 8a ausgebildet sind. Die Mitnehmereinrichtung 4 besteht im Wesentlichen aus gleichverteilten Vorsprüngen 9a, wobei zwischen diesen Vorsprüngen 9a gleichverteilte Ausnehmungen bzw. Freiräume 9b vorgesehen sind. Diese Vorsprünge 9a sind als Mitnehmerzapfen an dem Kettenförderer ausgebildet. Die Länge der Vorsprünge 8a in Bewegungsrichtung der Antriebsriemen 2a, 2b entspricht im Wesentlichen dem Abstand bzw. dem Zwischenraum zwischen den Vorsprüngen 9a der Mitnehmereinrichtung 4. In der gezeigten Ausführungsform ist weiterhin die Höhe der Vorsprünge 8a etwa die Hälfte der Breite der Vorsprünge 9a der Mitnehmereinrichtung 4, wie dies in der Fig. 5 dargestellt ist. Der Zwischenraum zwischen zwei Vorsprüngen 9a der Mitnehmereinrichtung 4 kann somit durch zwei gegenüberliegende Vorsprünge 8a der beiden Antriebsriemen 2a, 2b ausgefüllt werden, wie dies ebenfalls in eindeutiger Weise in der Fig. 5 dargestellt ist.

In der gezeigten Ausführungsform ist in jedem der Vorsprünge 8a der beiden Antriebsriemen 2a, 2b ein Magnet 7a, 7b angeordnet. Die Polung der Magneten 7a, 7b wird dabei so gewählt, dass sich je Antriebsriemen 2a, 2b im Bereich der Zugabschnitte 3a, 3b einander anziehen, so dass die gegenüberliegenden Vorsprünge 8a in Kontakt miteinander kommen und in gleichmäßigen formschlüssigen Eingriff mit den Vorsprüngen 9a der Mitnehmereinrichtung 4 gebracht werden. Durch die Bewegung der Antriebsriemen 2a, 2b mit Hilfe der Antriebszahnräder 10a, 10b wird die Trageinrichtung 1 in entsprechender Weise bewegt, wobei es keine einseitige Verschiebung des Kontaktpunktes zwischen den Vorsprüngen 8a der Antriebsriemen 2a, 2b und den Vorsprüngen 9a der Mitnehmereinrichtung 4 der Trageinrichtung 1 kommt.

In weiteren Details entspricht die vierte Ausführungsform den Ausführungsformen gemäß der vorgenannten Figuren bzw. kann die jeweils spezielle Art der Trageinrichtung angepasst werden.

In der gezeigten Ausführungsform gemäß Fig. 5 wird der formschlüssige Eingriff durch den Kontakt der Vorsprünge miteinander sowie den Parallelkontakt der jeweiligen Vorsprünge 8a mit den Vorsprüngen 9a vorgeschlagen. Alternativ zu dieser Ausführung kann der Antrieb derart gestaltet sein, dass die Vorsprünge des einen Antriebsriemens in Kontakt mit der Bodenfläche der Ausnehmung des gegenüberliegenden Antriebsriemens kommt, wobei die Vorsprünge der Trageinrichtung jeweils zwischen zwei Vorsprüngen der gegenüberliegenden Antriebsriemen in Bewegungsrichtung der Trageinrichtung sind. Bei dieser Variante sind Magneten in den Vorsprüngen der Antriebsriemen vorgesehen, wobei die Antriebsriemen im Bereich der Bodenflächen der Ausnehmungen als magnetisch anziehbar ausgebildet sind. Weiterhin kann natürlich auch die Bodenfläche mit entsprechenden Magneten ausgebildet sein und die Vorsprünge der Antriebsriemen sind magnetisch anziehbar. In weiterer Alternative zu diesen Ausführungsformen können ein Magnet bzw. mehrere Magnete in jedem der Antriebsriemen vorgesehen sein, wobei jeweils eine entgegen gesetzte Polung vorgesehen ist, wie dies bereits mit Bezug auf die erste Ausführungsform erläutert ist.

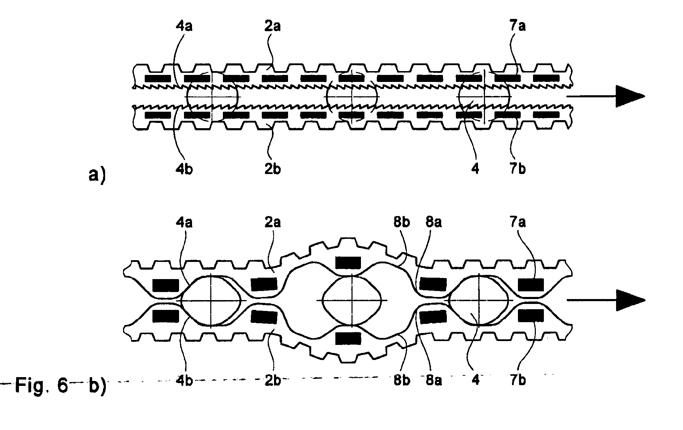

Die Fig. 6a zeigt eine fünfte Ausführungsform der Fördereinrichtung mit einem formschlüssigen Direktantrieb durch Magnetzahnriemen. Diese Ausführungsform entspricht im Wesentlichen der erläuterten ersten Ausführungsform, wobei im Gegensatz zur kraftschlüssigen Kraftübertragung der ersten Ausführungsform in der fünften Ausführungsform eine formschlüssige Kraftübertragung durch einen Verzahnungseingriff erfolgt. Hierbei sind, wie in der Fig. 6a gezeigt, eine Mehrzahl von Zähnen an den entsprechenden Flächen 4a, 4b der Riemen 2a, 2b vorgesehen. Diese Zähne greifen in korrespondierende Zähne der Mitnehmereinrichtung 4 ein. In der gezeigten Ausführungsform gemäß der Fig. 6a ist die Mitnehmereinrichtung 4 in Form von einzelnen Vorsprüngen ausgebildet, ähnlich wie in der vierten Ausführungsform. Alternativ hierzu kann die Mitnehmereinrichtung mit der entsprechenden Verzahnung der fünften Ausführungsform ähnlich der Mitnehmereinrichtung der ersten Ausführungsform ausgebildet sein. Hierzu wären die Mitnehmerelemente mit einer entsprechenden Verzahnung ausgebildet.

In der gezeigten Ausführungsform gemäß der Fig. 6a ist die Verzahnung zum sicheren Eingriff in Zugrichtung gemäß dem dargestellten Pfeil ausgebildet. Hierbei können bei einer Relativbewegung zwischen der Mitnehmereinrichtung und den Riemen in Gegenrichtung zu der normalen Zugrichtung diese Riemen von der Mitnehmereinrichtung ab einer gewissen Kraft abheben und so ein Durchrutschen ermöglichen. Diese Ausgestaltung dient als Sicherheitseinrichtung zur Verhinderung von Beschädigungen bei einer entsprechenden Fehlfunktion. Alternativ zu der gezeigten in Zugrichtung gerichteten Verzahlung kann die Verzahnung auch derart ausgebildet werden, dass diese symmetrisch quer zu der Bewegungsrichtung ausgebildet ist, so dass ein Abheben der Zahnriemen sowohl in Zugrichtung als auch in entgegen gesetzter Richtung möglich ist, um eine Beschädigung bei einer Überlastung, beispielsweise einem Verklemmen der Fördereinrichtung, zu verhindern.

Die Fig. 6b zeigt eine sechste Ausführungsform der Fördereinrichtung mit einem formschlüssigen Direktantrieb durch Magnetzahnriemen. Diese Ausführungsform entspricht im Wesentlichen der erläuterten vierten Ausführungsform, wobei die Teilung der Vorsprünge der Antriebsriemen hier nicht der Teilung der Mitnehmereinrichtung entsprechen muss. Bei der Ausführungsform gemäß der Fig. 6b kann die Antriebsübertragung teilweise durch formschlüssigen Eingriff erfolgen, wie dies in dem linken und rechten Abschnitt der Fig. 6b gezeigt ist, wobei gleichzeitig eine Kraftübertragung durch kraftschlüssigen Kontakt an dem Mitnehmerzapfen erfolgen kann, wie dies im mittleren Abschnitt der Fig. 6b dargestellt ist.

Bei der gezeigten Ausführungsform gemäß der Fig. 6b besteht die Mitnehmereinrichtung im Wesentlichen aus gleich verteilten Vorsprüngen, wobei diese Vorsprünge als Mitnehmerzapfen an dem Kettenförderer ausgebildet sind. Der Abstand zwischen den Vorsprüngen (die Teilung) an der Mitnehmereinrichtung entspricht hierbei nicht dem Abstand zwischen den Ausnehmungen an den gegenüberliegenden Riemen. Alternativ zu der Gleichverteilung der Vorsprünge an der Mitnehmereinrichtung kann die Ausführungsform gemäß der Fig. 6b auch in Verbindung mit einer Mitnehmereinrichtung verwendet werden, bei der die Vorsprünge ungleichmäßig verteilt sind.

Der umlaufende Magnet in einem Riemen kann durch eine Magneteinrichtung gebildet werden, die beispielsweise als umlaufender Elektromagnet ausgebildet ist. Alternativ kann eine entsprechende Magneteinrichtung durch gekoppelte Magnete gebildet werden. Die Mehrzahl von Magneten in einem Riemen bezieht sich auf im Wesentlichen voneinander unabhängiger Einzelmagnete. Die Ausführungsformen sind mit Bezug auf Elektround/oder Permanentmagnete erläutert. Alternativ können auch andere, beispielsweise auf eine magnetisierbare Flüssigkeit beruhende Magnete verwendet werden.

In den erläuterten Ausführungsformen ist die Mitnehmereinrichtung aus nichtmagnetischem bzw. nicht-magnetisierbarem Material, wie beispielsweise einem Kunststoff gebildet, so dass die Kraftübertragung durch Formschluss und/oder durch Kraftschluss aufgrund von Reibung erfolgt. Alternativ zu den gezeigten Mitnehmereinrichtungen in den Ausführungsformen können auch entsprechend gestaltete Mitnehmereinrichtungen zum Einsatz kommen, die selbst magnetisch bzw. magnetisierbar sind oder entsprechend durch Magnete angezogen werden. Hierbei kann die Mitnehmereinrichtung eisenhaltig sein. Beispielsweise können in der Mitnehmereinrichtung Eisenteile eingesetzt oder einem entsprechenden Kunststoff Eisenpulver beigemischt werden.

Weiterhin wird in einigen der gezeigten Ausführungsformen die Kombination eines magnetisch und/oder magnetisierbaren Antriebsriemens mit dem weiteren Antriebsriemen diskutiert, der durch den erstgenannten Antriebsriemen angezogen wird. Dies kann beispielsweise dadurch realisiert werden, dass der angezogene Riemen Eisenelemente enthält oder dem Riemengrundstoff Eisenpulver beigemischt ist.

Die erläuterten Ausführungsformen zeigen eine Fördereinrichtung mit einer Trageeinrichtung 1, die eine Mitnehmereinrichtung 4 aufweist, die sich im Wesentlichen in Bewegungsrichtung A1,A2 der Trageinrichtung 1 erstreckt und durch einen Antrieb 2 bewegbar ist. Der Antrieb 2 weist zumindest zwei umlaufende Antriebsriemen 2a, 2b auf. Zugabschnitte 3a, 3b der umlaufenden Antriebsriemen 2a, 2b liegen einander gegenüber und erstrecken sich entlang der Mitnehmereinrichtung 4. Die Mitnehmereinrichtung 4 erstreckt sich entlang eines Bereichs zwischen den Zugabschnitten 3a, 3b. Zumindest einer der Antriebsriemen 2a, 2b ist magnetisch oder magnetisierbar, und der gegenüberliege Antriebsriemen 2a, 2b wird magnetisch angezogen. Die umlaufenden Antriebsriemen 2a, 2b werden im Bereich der gegenüberliegenden Zugabschnitte 3a, 3b durch eine magnetische Kraft zueinander auf die Mitnehmereinrichtung 4 gezogen.

Gemäß einer Ausführungsform weisen die umlaufenden Antriebsriemen 2a, 2b jeweils umlaufende Klemmflächen 5a, 5b, und die Mitnehmereinrichtung 4 gegenüberliegende Klemmflächen 4a, 4b auf, wobei die Klemmflächen 5a, 5b der umlaufenden Antriebsriemen 2a, 2b im Bereich der einander gegenüberliegenden Zugabschnitte 3a, 3b durch die magnetische Kraft auf die Klemmflächen 4a, 4b der Mitnehmereinrichtung 4 kraftschlüssig gedrückt werden.

Einer der Antriebsriemen 2a, 2b weist eine umlaufende Magneteinrichtung (umlaufender Magnet) 6a, 6b auf und der gegenüberliegende Antriebsriemen 2a, 2b wird durch den umlaufenden Magnet 6a, 6b angezogen, wobei sich die Klemmfläche 5a, 5b des umlaufenden Antriebsriemens 2a, 2b entlang des umlaufenden Magnet 6a, 6b erstreckt. Alternativ weisen beide Antriebsriemen 2a, 2b einen umlaufenden Magneten 6a, 6b auf, die im Bereich der Zugabschnitte entgegen gesetzte Polung aufweisen, und die gegenüberliegende Antriebsriemen 2a, 2b werden durch die umlaufenden Magnete 6a, 6b im Bereich der Zugabschnitte 3a, 3b angezogen, wobei sich die Klemmflächen 5a, 5b des umlaufenden Antriebsriemens 2a, 2b entlang der umlaufenden Magnete 6a, 6b erstrecken. Gemäß einer weiteren Alternative weist einer der Antriebsriemen 2a, 2b eine Mehrzahl von Magneten 7a, 7b auf und der gegenüberliegende Antriebsriemen 2a, 2b durch die Magnete 7a, 7b angezogen wird, wobei sich die Klemmfläche 5a, 5b des umlaufenden Antriebsriemens 2a, 2b über die Magneten 7a, 7b erstreckt. Gemäß einer weiteren Alternative weisen beide Antriebsriemen 2a, 2b eine Mehrzahl von Magneten 7a, 7b auf und die magnetische Kraft drückt die Zugabschnitte 3a, 3b auf die Klemmflächen 4a, 4b der Mitnehmereinrichtung 4, wobei sich die Klemmflächen 5a, 5b der umlaufenden Antriebsriemen 2a, 2b über die Magneten 7a, 7b erstrecken. Die Magnete 7a, 7b sind in dem jeweiligen Antriebsriemen 2a, 2b mit gleichgerichteter Polung angeordnet, wobei in den gegenüberliegenden Antriebsriemen 2a, 2b die Magnete 7a, 7b jeweils mit entgegen gesetzter Polung angeordnet sind, oder die Magnete 7a,7b sind in dem jeweiligen Antriebsriemen 2a, 2b mit wechselnder Polung angeordnet, wobei die gegenüberliegenden Antriebsriemen 2a, 2b der Art angeordnet sind, dass im Bereich der Zugabschnitte 3a, 3b die Magnete 7a, 7b mit entgegen gesetzter Polung zueinander angeordnet sind.

Die Magnete 6a, 6b; 7a, 7b sind als Permanent- und/oder Elektromagnete ausgebildet.

Gemäß spezieller Ausführungsformen weisen die zwei einander gegenüberliegenden umlaufenden Antriebsriemen 2a, 2b jeweils eine Mehrzahl von Vorsprüngen 8a und/oder Ausnehmungen 8b, und die Mitnehmereinrichtung 4 gleichverteilte Vorsprünge 9a und/oder Ausnehmungen 9b auf, wobei die Vorsprünge 8a und/oder Ausnehmungen 8b der umlaufenden Antriebsriemen 2a, 2b im Bereich der einander gegenüberliegenden Zugabschnitte 3a, 3b durch die magnetische Kraft mit den Vorsprüngen 9a und/oder Ausnehmungen 9b der Mitnehmereinrichtung 4 in formschlüssigem Eingriff und/oder kraftschlüssigem Kontakt gehalten werden.

Gemäß dieser Ausführungsformen können die Vorsprünge 9a und/oder Ausnehmungen 9b der Mitnehmereinrichtung 4 gleichverteilt (gleicher Abstand in Bewegungsrichtung) oder ungleichverteilt (wechselnder Abstand in Bewegungsrichtung) sein. Gemäß dieser Ausführungsformen können diese Mitnehmereinrichtungen mit Antriebsriemen kombiniert werden deren Vorsprünge 8a und/oder die Ausnehmungen 8b der umlaufenden Antriebsriemen 2a,2b gleichverteilt (gleicher Abstand in Bewegungsrichtung) oder ungleichverteilt (wechselnder Abstand in Bewegungsrichtung) sind.

Bei einem Unterschied in der Teilung in der Mitnehmereinrichtung 4 zu der Teilung in den umlaufenden Antriebsriemen 2a,2b, wird lediglich nur ein Teil der Vorsprünge 8a und/oder Ausnehmungen (8b) der umlaufenden Antriebsriemen 2a,2b im Bereich der einander gegenüberliegenden Zugabschnitte 3a,3b durch die magnetische Kraft mit den Vorsprüngen 9a und/oder Ausnehmungen 9b der Mitnehmereinrichtung 4 in formschlüssigem Eingriff gehalten. Ein weiterer Teil der Vorsprünge 8a der umlaufenden Antriebsriemen 2a,2b wird im Bereich der einander gegenüberliegenden Zugabschnitte 3a,3b durch die magnetische Kraft mit den Vorsprüngen 9a der Mitnehmereinrichtung 4 in kraftschlüssigen Kontakt gehalten (Fig. 6b).

Bei gleicher Teilung in der Mitnehmereinrichtung (4) und den umlaufenden Antriebsriemen 2a,2b, werden alle Vorsprünge 8a und/oder Ausnehmungen (8b) der umlaufenden Antriebsriemen 2a,2b im Bereich der einander gegenüberliegenden Zugabschnitte 3a,3b durch die magnetische Kraft mit den Vorsprüngen 9a und/oder Ausnehmungen 9b der Mitnehmereinrichtung 4 in formschlüssigem Eingriff gehalten (Fig. 5).

Die Vorsprünge 8a der Antriebsriemen 2a, 2b sind in Kontakt miteinander, wenn diese mit den Vorsprüngen 9a und/oder Ausnehmungen 9b der Mitnehmereinrichtung 4 in formschlüssigem Eingriff gehalten werden, oder die Vorsprünge 8a eines der Antriebsriemen 2a, 2b sind in Eingriff mit den Ausnehmungen des anderen Antriebsriemens 2a, 2b, wenn diese mit den Vorsprüngen 9a und/oder Ausnehmungen 9b der Mitnehmereinrichtung 4 in formschlüssigem Eingriff gehalten werden.

Gemäß einer speziellen Ausführungsform weist einer der Antriebsriemen 2a, 2b einen umlaufenden Magnet 6a, 6b auf und der gegenüberliegende Antriebsriemen 2a, 2b wird durch den umlaufenden Magnet 6a, 6b angezogen, wobei sich die Vorsprünge 8a und/oder Ausnehmungen 8b des umlaufenden Antriebsriemens 2a, 2b entlang des umlaufenden Magnet 6a, 6b erstrecken. Alternativ weisen beide Antriebsriemen 2a, 2b einen umlaufenden Magnet 6a, 6b auf, die im Bereich der Zugabschnitte entgegengesetzte Polung aufweisen. Die gegenüberliegenden Antriebsriemen 2a, 2b werden durch die umlaufenden Magnet 6a, 6b im Bereich der Zugabschnitte 3a, 3b angezogen, wobei sich die Vorsprünge 8a und/oder Ausnehmungen 8b des umlaufenden Antriebsriemens 2a, 2b entlang der umlaufenden Magnete 6a, 6b erstrecken. Gemäß einer weiteren Alternative weist einer der Antriebsriemen 2a, 2b eine Mehrzahl von Magneten 7a, 7b in den Vorsprüngen 8a und/oder Ausnehmungen 8b auf, und der gegenüberliegende Antriebsriemen 2a, 2b wird durch die Magnete 7a, 7b angezogen. Gemäß einer weiteren Alternative weisen beide Antriebsriemen 2a, 2b eine Mehrzahl von Magneten 7a, 7b in den Vorsprüngen 8a und/oder Ausnehmungen 8b auf und die Magnete 7a, 7b sind in den Antriebsriemen 2a, 2b mit entgegen gesetzter Polung angeordnet, so dass die magnetische Kraft die Zugabschnitte 3a, 3b aufeinander drückt.

Die Magnete 7a, 7b in den Vorsprüngen 8a der jeweiligen Antriebsriemen 2a, 2b sind mit gleichgerichteter Polung angeordnet, wobei in den gegenüberliegenden Antriebsriemen 2a, 2b die Magnete 7a, 7b jeweils mit entgegen gesetzter Polung angeordnet sind, oder die Magnete 7a, 7b sind in den Vorsprüngen 8a der jeweiligen Antriebsriemen 2a, 2b mit wechselnder Polung angeordnet, wobei die gegenüberliegenden Antriebsriemen 2a, 2b mit den Vorsprüngen 8a der Art angeordnet sind, dass im Bereich der Zugabschnitte 3a, 3b die Magnete 7a, 7b mit entgegen gesetzter Polung zueinander angeordnet sind. Die Magnete 6a, 6b; 7a, 7b sind als Permanent und/oder Elektromagnete ausgebildet.

Gemäß der Ausführungsformen umschlingt jeder der Antriebsriemen 2a, 2b ein Antriebsrad 10a, 10b und ein Führungsrad 11a, 11b. Die Antriebsriemen 2a, 2b sind als Zahnriemen ausgebildet, und das Antriebsrad 10a, 10b ist als Antriebszahnrad und das Führungsrad 11a, 11 b ist als Führungszahnrad ausgebildet.

Die Fördereinrichtung gemäß der Ausführungsformen weist einen Direktantrieb auf, bei dem die Krafteinleitung auf größere Kontaktzonen bzw. mehrere Eingriffselemente verteilt wird und somit die Belastung in den Bauteilen vermindert wird. Die Fördereinrichtung gemäß der Ausführungsformen weist einen hohen Wirkungsgrad des Direktantriebes auf, da keine Reibkräfte in Folge der Abstützung der Zahnriemenpaare entstehen. Die Fördereinrichtung gemäß der Ausführungsformen hat nahezu keine Schlupfprobleme durch große Kontaktzonen und hohe Reibkräfte in Folge der gezielten Reibwert erhöhenden Beschichtung der Zahnriemenrücken. Die Fördereinrichtung gemäß der Ausführungsformen ermöglicht eine Minderung des Verschleißes an den Krafteinleitungselementen und vermeidet den Polygoneffekt in Kettenförderern, die mit Kettenräder angetrieben werden.

Für die Fördereinrichtung gemäß der Ausführungsformen kann bei kraftschlüssig angetriebenen Zug- und Tragmitteln die Vorspannkraft erheblich gesenkt werden, so dass auch bei der Umgebungskonstruktion eine leichtere Bauweise realisiert werden kann. Bei einer Fördereinrichtung gemäß der Ausführungsformen mit formschlüssig angetriebenen Kettenfördersystemen führen größere Teilungsschwankungen bzw. -zunahmen in den Zugmitteln nicht zum Überspringen der Kettenräder bzw. zur Behinderung des Kettenauslaufs. Die Fördereinrichtung gemäß der Ausführungsformen ist als Zwischenantrieb in flachen bis steilen Förderstrecken, insbesondere mit großen Trommelabständen geeignet.

## Patentansprüche

1. Fördereinrichtung mit einer Trageeinrichtung (1), die eine Mitnehmereinrichtung (4) aufweist, die sich im Wesentlichen in Bewegungsrichtung (A1, A2) der Trageinrichtung (1) erstreckt und durch einen Antrieb (2) bewegbar ist, wobei der Antrieb (2) zumindest zwei umlaufende Antriebsriemen (2a, 2b) aufweist, wobei Zugabschnitte (3a, 3b) der umlaufenden Antriebsriemen (2a, 2b) einander gegenüberliegen und sich die Mitnehmereinrichtung (4) entlang eines Bereichs zwischen den Zugabschnitten (3a, 3b) erstreckt, und wobei die Antriebsriemen (2a, 2b) im Bereich der Zugabschnitte (3a, 3b) mit der Mitnehmereinrichtung (4) in kraft- und/oder formschlüssiger Antriebsverbindung sind, **dadurch gekennzeichnet dass** zumindest einer der Antriebsriemen (2a, 2b) magnetisch ist, und der gegenüberliegende Antriebsriemen (2a, 2b) magnetisch angezogen ist, und die umlaufenden Antriebsriemen (2a, 2b) im Bereich der gegenüberliegenden Zugabschnitte (3a, 3b) durch eine magnetische Kraft zueinander auf die Mitnehmereinrichtung (4) angezogen sind.

2. Fördereinrichtung nach Anspruch 1, **dadurch gekennzeichnet, dass** die umlaufenden Antriebsriemen (2a, 2b) jeweils umlaufende Klemmflächen (5a, 5b), und die Mitnehmereinrichtung (4) gegenüberliegende Klemmflächen (4a, 4b) aufweist, wobei die Klemmflächen (5a, 5b) der umlaufenden Antriebsriemen (2a, 2b) im Bereich der einander gegenüberliegenden Zugabschnitte (3a, 3b) durch die magnetische Kraft auf die Klemmflächen (4a, 4b) der Mitnehmereinrichtung (4) kraftschlüssig gedrückt werden.

3. Fördereinrichtung nach Anspruch 2, **dadurch gekennzeichnet, dass** einer der Antriebsriemen (2a, 2b) eine umlaufende Magneteinrichtung (6a, 6b, 7a, 7b) aufweist und der gegenüberliegende Antriebsriemen (2a, 2b) durch die umlaufende Magneteinrichtung (6a, 6b, 7a, 7b) angezogen ist, wobei sich die Klemmfläche (5a, 5b) des umlaufenden Antriebsriemens (2a, 2b) entlang der umlaufenden Magneteinrichtung (6a, 6b, 7a, 7b) erstreckt, oder beide Antriebsriemen (2a, 2b) eine umlaufende Magneteinrichtung (6a, 6b, 7a, 7b) aufweisen, die im Bereich der Zugabschnitte entgegengesetzte Polung aufweisen, und die gegenüberliegende Antriebsriemen (2a, 2b) durch die umlaufende Magneteinrichtung (6a, 6b, 7a, 7b) im Bereich der Zugabschnitte (3a, 3b) angezogen sind, wobei sich die Klemmflächen (5a, 5b) der umlaufenden Antriebsriemen (2a, 2b) entlang der umlaufenden Magneteinrichtung (6a, 6b, 7a, 7b) erstrecken.

4. Fördereinrichtung nach Anspruch 3, **dadurch gekennzeichnet, dass** die umlaufende Magneteinrichtung eine Mehrzahl von Magneten (6a, 6b, 7a, 7b) aufweist

5. Fördereinrichtung nach Anspruch 4, **dadurch gekennzeichnet, dass** die Magnete (6a, 6b, 7a, 7b) in dem jeweiligen Antriebsriemen (2a, 2b) mit gleichgerichteter Polung angeordnet sind, wobei in den gegenüberliegenden Antriebsriemen (2a, 2b) die Magnete (6a, 6b, 7a, 7b) jeweils mit entgegengesetzter Polung angeordnet sind, oder die Magnete (6a, 6b, 7a, 7b) in dem jeweiligen Antriebsriemen (2a, 2b) mit wechselnder Polung angeordnet sind, wobei die gegenüberliegenden Antriebsriemen (2a, 2b) der Art angeordnet sind, dass im Bereich der Zugabschnitte (3a, 3b) die Magnete (6a, 6b, 7a, 7b) mit entgegengesetzter Polung zueinander angeordnet sind.

6. Fördereinrichtung nach Anspruch 1, **dadurch gekennzeichnet, dass** die zwei einander gegenüberliegenden umlaufenden Antriebsriemen (2a, 2b) jeweils eine Mehrzahl von Vorsprüngen (8a) und/oder Ausnehmungen (8b), und die Mitnehmereinrichtung (4) Vorsprünge (9a) und/oder Ausnehmungen (9b) aufweist, wobei die Vorsprünge (8a) und/oder Ausnehmungen (8b) der umlaufenden Antriebsriemen (2a, 2b) im Bereich der einander gegenüberliegenden Zugabschnitte (3a, 3b) durch die magnetische Kraft mit den Vorsprüngen (9a) und/oder Ausnehmungen (9b) der Mitnehmereinrichtung (4) in formschlüssigem Eingriff und/oder kraftschlüssigem Kontakt gehalten sind.

7. Fördereinrichtung nach Anspruch 6, **dadurch gekennzeichnet, dass** Vorsprünge (9a) und/oder Ausnehmungen (9b) der Mitnehmereinrichtung (4) gleichverteilt oder ungleichverteilt sind, und/oder die Vorsprünge (8a) und/oder die Ausnehmungen (8b) der umlaufenden Antriebsriemen (2a, 2b) gleichverteilt oder ungleichverteilt sind.

8. Fördereinrichtung nach Anspruch 7, **dadurch gekennzeichnet, dass** eine Teilung der Mitnehmereinrichtung (4) zu der Teilung in den umlaufenden Antriebsriemen (2a, 2b) verschieden ist und ein Teil der Vorsprünge (8a) und/oder Ausnehmungen (8b) der umlaufenden Antriebsriemen (2a, 2b) im Bereich der einander gegenüberliegenden Zugabschnitte (3a, 3b) durch die magnetische Kraft mit den Vorsprüngen (9a) und/oder Ausnehmungen (9b) der Mitnehmereinrichtung (4) in formschlüssigem Eingriff, und ein weiterer Teil der Vorsprünge (8a) der umlaufenden Antriebsriemen (2a, 2b) im Bereich der einander gegenüberliegenden Zugabschnitte (3a, 3b) durch die magnetische Kraft mit den Vorsprüngen (9a) der Mitnehmereinrichtung (4) in kraftschlüssigem Kontakt gehalten sind.

9. Fördereinrichtung nach Anspruch 8, **dadurch gekennzeichnet, dass** bei gleicher Teilung in der Mitnehmereinrichtung (4) und den umlaufenden Antriebsriemen (2a, 2b), die Vorsprünge (8a) und/oder Ausnehmungen (8b) der umlaufenden Antriebsriemen (2a, 2b) im Bereich der einander gegenüberliegenden Zugabschnitte (3a, 3b) durch die magnetische Kraft mit den Vorsprüngen (9a) und/oder Ausnehmungen (9b) der Mitnehmereinrichtung (4) in formschlüssigem Eingriff gehalten sind.

10. Fördereinrichtung nach zumindest einem der Ansprüche 7 bis 10, **dadurch gekennzeichnet, dass** die Vorsprünge (8a) der Antriebsriemen (2a, 2b) in Kontakt miteinander sind, wenn diese mit den Vorsprüngen (9a) und/oder Ausnehmungen (9b) der Mitnehmereinrichtung (4) in formschlüssigem Eingriff gehalten werden, oder die Vorsprünge (8a) eines der Antriebsriemen (2a, 2b) in Eingriff mit den Ausnehmungen des anderen Antriebsriemens (2a, 2b) sind, wenn diese mit den Vorsprüngen (9a) und/oder Ausnehmungen (9b) der Mitnehmereinrichtung (4) in formschlüssigem Eingriff gehalten sind.

11. Fördereinrichtung nach zumindest einem der Ansprüche 6 bis 10, **dadurch gekennzeichnet, dass** einer der Antriebsriemen (2a, 2b) eine umlaufende Magneteinrichtung (6a, 6b, 7a, 7b) aufweist und der gegenüberliegende Antriebsriemen (2a, 2b) durch die umlaufende Magneteinrichtung (6a, 6b, 7a, 7b) angezogen ist, wobei sich die Vorsprünge (8a) und/oder Ausnehmungen (8b) des umlaufenden Antriebsriemens (2a, 2b) entlang der umlaufender Magneteinrichtung (6a, 6b, 7a, 7b) erstrecken, oder beide Antriebsriemen (2a, 2b) eine umlaufende Magneteinrichtung (6a, 6b, 7a, 7b) aufweisen, die im Bereich der Zugabschnitte entgegen gesetzte Polung aufweisen, und die gegenüberliegenden Antriebsriemen (2a, 2b) durch die umlaufende Magneteinrichtung (6a, 6b, 7a, 7b) im Bereich der Zugabschnitte (3a, 3b) angezogen sind, wobei sich die Vorsprünge (8a) und/oder Ausnehmungen (8b) des umlaufenden Antriebsriemens (2a, 2b) entlang der umlaufenden Magneteinrichtung (6a, 6b, 7a, 7b) erstrecken.

12. Fördereinrichtung nach Anspruche 11, **dadurch gekennzeichnet, dass** die umlaufende Magneteinrichtung eine Mehrzahl von Magneten (7a, 7b) in den Vorsprüngen (8a) und/oder Ausnehmungen (8b) aufweist, und der gegenüberliegende Antriebsriemen (2a, 2b) durch die Magnete (7a, 7b) angezogen wird, oder beide Antriebsriemen (2a, 2b) eine Mehrzahl von Magneten (7a, 7b) in den Vorsprüngen (8a) und/oder Ausnehmungen (8b) aufweisen und die Magnete (7a, 7b) in den Antriebsriemen (2a, 2b) mit entgegengesetzter Polung angeordnet sind, wobei die magnetische Kraft die Zugabschnitte (3a, 3b) aufeinander drückt.

13. Fördereinrichtung nach Anspruch 12, **dadurch gekennzeichnet, dass** die Magnete (7a, 7b) in den Vorsprüngen (8a) der jeweiligen Antriebsriemen (2a, 2b) mit gleichgerichteter Polung angeordnet sind, wobei in den gegenüberliegenden Antriebsriemen (2a, 2b) die Magnete (7a, 7b) jeweils mit entgegengesetzter Polung angeordnet sind, oder die Magnete (7a, 7b) in den Vorsprüngen (8a) der jeweiligen Antriebsriemen (2a, 2b) mit wechselnder Polung angeordnet sind, wobei die gegenüberliegenden Antriebsriemen (2a, 2b) mit den Vorsprüngen (8a) der Art angeordnet sind, dass im Bereich der Zugabschnitte (3a, 3b) die Magnete (7a, 7b) mit entgegengesetzter Polung zueinander angeordnet sind.

14. Fördereinrichtung nach zumindest einem der Ansprüche 3 bis 5 oder 11 bis 13, **dadurch gekennzeichnet, dass** die Magnete (6a, 6b; 7a, 7b) als Permanent- und/oder Elektromagneten ausgebildet sind.

15. Fördereinrichtung nach zumindest einem der Ansprüche 1 bis 14, **dadurch gekennzeichnet, dass** jeder der Antriebsriemen (2a, 2b) ein Antriebsrad (10a, 10b) und ein Führungsrad (11a, 11b) umschlingt, insbesondere die Antriebsriemen (2a, 2b) als Zahnriemen ausgebildet sind, und das Antriebsrad (10a, 10b) als Antriebszahnrad und das Führungsrad (11a, 11 b) als Führungszahnrad ausgebildet ist und/oder vorzugsweise die Antriebsriemen und/oder die Mitnehmereinrichtung magnetisch oder magnetisierbar sind, und vorzugsweise Eisen enthalten.

## Claims

1. Conveyer system with a conveyor device (1) displaceable by means of a drive (2), which drive (2) has at least two circulating drive belts (2a, 2b), and tensioning portions (3a, 3b) of the circulating drive belts (2a,2b) lie opposite one another, and the drive belts (2a, 2b) are drivingly connected to the driver device (4) in a non-positive and/or positive arrangement in the region of the tensioning portions (3a, 3b), **characterised in that** at least one of the drive belts (2a, 2b) is magnetic and the oppositely lying drive belt (2a, 2b) is magnetically attracted, and the circulating drive belts (2a, 2b) are attracted towards one another onto the driver device (4) by a magnetic force in the region of the oppositely lying tensioning portions (3a, 3b).

2. Conveyer system as claimed in claim 1, **characterised in that** the circulating drive belts (2a, 2b) respectively have circulating clamping surfaces (5a, 5b) and the driver device (4) has oppositely lying clamping surfaces (4a, 4b), and the clamping surfaces (5a, 5b) of the circulating drive belts (2a, 2b) are forced onto the clamping surfaces (4a, 4b) of the driver device (4) in a positively fitting arrangement by the magnetic force in the region of the oppositely lying tensioning portions (3a, 3b).

3. Conveyer system as claimed in claim 2, **characterised in that** one of the drive belts (2a, 2b) has a circulating magnetic device (6a, 6b, 7a, 7b) and the oppositely lying drive belt (2a, 2b) is attracted by the circulating magnetic device (6a, 6b, 7a, 7b), and the clamping surface (5a, 5b) of the circulating drive belt (2a, 2b) extends along the circulating magnetic device (6a, 6b, 7a, 7b), or both drive belts (2a, 2b) have a circulating magnetic device (6a, 6b, 7a, 7b) of opposite polarity in the region of the tensioning portions, and the oppositely lying drive belts (2a, 2b) are attracted by the circulating magnetic device (6a, 6b, 7a, 7b) in the region of the tensioning portions (3a, 3b), and the clamping surfaces (5a, 5b) of the circulating drive belts (2a, 2b) extend along the circulating magnetic device (6a, 6b, 7a, 7b).

4. Conveyer system as claimed in claim 3, **characterised in that** the circulating magnetic device comprises a plurality of magnets (6a, 6b, 7a, 7b).

5. Conveyer system as claimed in claim 4, **characterised in that** the magnets (6a, 6b, 7a, 7b) disposed in one respective drive belt (2a, 2b) are provided with the same polarity and the magnets (6a, 6b, 7a, 7b) in the oppositely lying drive belts (2a, 2b) are respectively provided with the opposite polarity, or the magnets (6a, 6b, 7a, 7b) disposed in one respective drive belt (2a, 2b) are provided with alternating polarity, and the oppositely lying drive belts (2a, 2b) are disposed so that the magnets (6a, 6b, 7a, 7b) with opposite polarity are disposed facing one another in the region of the tensioning portions (3a, 3b).

6. Conveyer system as claimed in claim 1, **characterised in that** the two oppositely lying circulating drive belts (2a, 2b) respectively have a plurality of projections (8a) and/or recesses (8b) and the driver device (4) has projections (9a) and/or recesses (9b), and the projections (8a) and/or recesses (8b) of the circulating drive belts (2a, 2b) are held in positive engagement and/or non-positive contact with the projections (9a) and/or recesses (9b) of the driver device (4) by the magnetic force in the region of the oppositely lying tensioning portions (3a, 3b).

7. Conveyer system as claimed in claim 6, **characterised in that** projections (9a) and/or recesses (9b) of the driver device (4) are evenly distributed or unevenly distributed and/or the projections (8a) and/or the recesses (8b) of the circulating drive belts (2a, 2b) are evenly distributed or unevenly distributed.

8. Conveyer system as claimed in claim 7, **characterised in that** a distribution of the driver device (4) differs from the distribution in the circulating drive belts (2a, 2b) and some of the projections (8a) and/or recesses (8b) of the circulating drive belts (2a, 2b) are held in a positive engagement with the projections (9a) and/or recesses (9b) of the driver device (4) by the magnetic force in the region of the oppositely lying tensioning portions (3a, 3b), and other ones of the projections (8a) of the circulating drive belts (2a, 2b) are held in non-positive contact with the projections (9a) of the driver device (4) by the magnetic force in the region of the oppositely lying tensioning portions (3a, 3b).

9. Conveyer system as claimed in claim 8, **characterised in that** if the distribution in the driver device (4) and the circulating drive belts (2a, 2b) is the same, the projections (8a) and/or recesses (8b) of the circulating drive belts (2a, 2b) are held in positive engagement with the projections (9a) and/or recesses (9b) of the driver device (4) by the magnetic force in the region of the oppositely lying tensioning portions (3a, 3b).

10. Conveyer system as claimed in at least one of claims 7 to 9, **characterised in that** the projections (8a) of the drive belts (2a, 2b) are in contact with one another when they are held in positive engagement with the projections (9a) and/or recesses (9b) of the driver device (4), or the projections (8a) of one of the drive belts (2a, 2b) are in engagement with the recesses of the other drive belt (2a, 2b) when they are held in positive engagement with the projections (9a) and/or recesses (9b) of the driver device (4).

11. Conveyer system as claimed in at least one of claims 6 to 10, **characterised in that** one of the drive belts (2a, 2b) has a circulating magnetic device (6a, 6b, 7a, 7b) and the oppositely lying drive belt (2a, 2b) is attracted by the circulating magnetic device (6a, 6b, 7a, 7b), and the projections (8a) and/or recesses (8b) of the circulating drive belt (2a, 2b) extend along the circulating magnetic device (6a, 6b, 7a, 7b), or both drive belts (2a, 2b) have a circulating magnetic device (6a, 6b, 7a, 7b) with oppositely set polarity in the region of the tensioning portions, and the oppositely lying drive belts (2a, 2b) are attracted by the circulating magnetic device (6a, 6b, 7a, 7b) in the region of the tensioning portions (3a, 3b), and the projections (8a) and/or recesses (8b) of the circulating drive belt (2a, 2b) extend along the circulating magnetic device (6a, 6b, 7a, 7b).

12. Conveyer system as claimed in claim 11, **characterised in that** the circulating magnetic device comprises a plurality of magnets (7a, 7b) in the projections (8a) and/or recesses (8b), and the oppositely lying drive belt (2a, 2b) is attracted by the magnets (7a, 7b), or both drive belts (2a, 2b) have a plurality of magnets (7a, 7b) in the projections (8a) and/or recesses (8b) and the magnets (7a, 7b) in the drive belts (2a, 2b) are provided with an opposite polarity, and the magnetic force pushes the tensioning portions (3a, 3b) towards one another.

13. Conveyer system as claimed in claim 12, **characterised in that** the magnets (7a, 7b) in the projections (8a) of one respective drive belt (2a, 2b) are provided with the same polarity and the magnets (7a, 7b) in the oppositely lying drive belt (2a, 2b) are respectively provided with the opposite polarity, or the magnets (7a, 7b) in the projections (8a) of one respective drive belt (2a, 2b) are provided with alternating polarity, and the oppositely lying drive belts (2a, 2b) with the projections (8a) are disposed so that the magnets (7a, 7b) with opposite polarity are disposed facing one another in the region of the tensioning portions (3a, 3b).

14. Conveyer system as claimed in at least one of claims 3 to 5 or 11 to 13, **characterised in that** the magnets (6a, 6b; 7a, 7b) are provided in the form of permanent magnets and/or electro-magnets.

15. Conveyer system as claimed in at least one of claims 1 to 14, **characterised in that** each of the drive belts (2a, 2b) loops around a drive wheel (10a, 10b) and a guide wheel (11a, 11b), the drive belts (2a, 2b) being provided in particular as toothed belts, and the drive wheel (10a, 10b) being provided as a driving gear and the guide wheel (11a, 11b) being provided as a guiding gear and/or the drive belts and/or the driver device are preferably magnetic or magnetisable and preferably contain iron.

## Revendications

1. Dispositif de transport comprenant un dispositif porteur (1) qui présente un dispositif entraîneur (4) s'étendant sensiblement dans la direction de mouvement (A1, A2) du dispositif porteur (1) et peut être déplacé par un système d'entraînement (2), dispositif dans lequel le système d'entraînement (2) présente au moins deux courroies d'entraînement (2a, 2b) en révolution,
dans lequel des tronçons de traction (3a, 3b) des courroies d'entraînement (2a, 2b) en révolution sont en regard l'un de l'autre, et le dispositif entraîneur (4) s'étend le long d'une zone entre les tronçons de traction (3a, 3b),
et dans lequel les courroies d'entraînement (2a, 2b) sont, dans la zone des tronçons de traction (3a, 3b), en liaison d'entraînement, par adhérence et/ou complémentarité de formes, avec le dispositif entraîneur (4),
**caractérisé en ce que** l'une au moins des courroies d'entraînement (2a, 2b) est magnétique et la courroie d'entraînement (2a, 2b) en regard est attirée magnétiquement, et les courroies d'entraînement (2a, 2b) en révolution sont, dans la zone des tronçons de traction (3a, 3b) mutuellement en regard, attirées l'une vers l'autre sur le dispositif entraîneur (4) par une force magnétique.

2. Dispositif de transport selon la revendication 1, **caractérisé en ce que** les courroies d'entraînement (2a, 2b) en révolution présentent chacune des surfaces de serrage respectives (5a, 5b) en révolution, et le dispositif entraîneur (4) présente des surfaces de serrage (4a, 4b) en regard, les surfaces de serrage (5a, 5b) des courroies d'entraînement (2a, 2b) en révolution, dans la zone des tronçons de traction (3a, 3b) mutuellement en regard, étant pressées par adhérence sur les surfaces de serrage (4a, 4b) du dispositif entraîneur (4), par l'intermédiaire de la force magnétique.

3. Dispositif de transport selon la revendication 2, **caractérisé en ce que** l'une des courroies d'entraînement (2a, 2b) présente un dispositif d'aimant (6a, 6b, 7a, 7b) en révolution, et la courroie d'entraînement (2a, 2b) mutuellement en regard est attirée par le dispositif d'aimant (6a, 6b, 7a, 7b) en révolution, la surface de serrage (5a, 5b) de la courroie d'entraînement (2a, 2b) en révolution s'étendant le long du dispositif d'aimant (6a, 6b, 7a, 7b) en révolution, ou bien les deux courroies d'entraînement (2a, 2b) présentent un dispositif d'aimant (6a, 6b, 7a, 7b) en révolution présentant une polarité opposée dans la zone des tronçons de traction, et les courroies d'entraînement (2a, 2b) mutuellement en regard s'attirent dans la zone des tronçons de traction (3a, 3b) par le dispositif d'aimant (6a, 6b, 7a, 7b) en révolution, les surfaces de serrage (5a, 5b) des courroies d'entraînement (2a, 2b) en révolution s'étendant le long du dispositif d'aimant (6a, 6b, 7a, 7b) en révolution.

4. Dispositif de transport selon la revendication 3, **caractérisé en ce que** le dispositif d'aimant en révolution comprend une pluralité d'aimants (6a, 6b, 7a, 7b).

5. Dispositif de transport selon la revendication 4, **caractérisé en ce que** les aimants (6a, 6b, 7a, 7b) sont agencés dans la courroie d'entraînement (2a, 2b) respective avec une polarité de même sens, les aimants (6a, 6b, 7a, 7b) étant, dans les courroies d'entraînement (2a, 2b) mutuellement regard, agencés avec une polarité respectivement opposée, ou bien les aimants (6a, 6b, 7a, 7b) sont agencés dans la courroie d'entraînement (2a, 2b) respective avec une polarité alternée, les courroies d'entraînement (2a, 2b) mutuellement en regard étant agencées de manière telle, que dans la zone des tronçons de traction (3a, 3b) les aimants (6a, 6b, 7a, 7b) soient agencés avec des polarités mutuellement opposées.

6. Dispositif de transport selon la revendication 1, **caractérisé en ce que** les deux courroies d'entraînement (2a, 2b) en révolution, mutuellement en regard, présentent chacune une pluralité de protubérances (8a) et/ou d'évidements (8b), et le dispositif entraîneur (4) des protubérances (9a) et/ou des évidements (9b), les protubérances (8a) et/ou les évidements (8b) des courroies d'entraînement (2a, 2b) en révolution, dans la zone des tronçons de traction (3a, 3b) mutuellement en regard, étant en prise par complémentarité de formes et/ou maintenus en contact par adhérence, par l'intermédiaire de la force magnétique, avec les protubérances (9a) et/ou les évidements (9b) du dispositif entraîneur (4).

7. Dispositif de transport selon la revendication 6, **caractérisé en ce que** les protubérances (9a) et/ou les évidements (9b) du dispositif entraîneur (4) sont répartis de manière régulière ou répartis de manière irrégulière, et/ou les protubérances (8a) et/ou les évidements (8b) des courroies d'entraînement (2a, 2b) en révolution sont répartis de manière régulière ou répartis de manière irrégulière.

8. Dispositif de transport selon la revendication 7, **caractérisé en ce qu'**un pas du dispositif entraîneur (4) est différent du pas dans les courroies d'entraînement (2a, 2b) en révolution, et une partie des protubérances (8a) et/ou des évidements (8b) des courroies d'entraînement (2a, 2b) en révolution, dans la zone des tronçons de traction (3a, 3b) mutuellement en regard, sont maintenus en prise par complémentarité de formes, par l'intermédiaire de la force magnétique, avec les protubérances (9a) et/ou les évidements (9b) du dispositif entraîneur (4), et une autre partie des protubérances (8a) des courroies d'entraînement (2a, 2b) en révolution, dans la zone des tronçons de traction (3a, 3b) mutuellement en regard, sont maintenues en contact par adhérence, par l'intermédiaire de la force magnétique, avec les protubérances (9a) du dispositif entraîneur (4).

9. Dispositif de transport selon la revendication 8, **caractérisé en ce que** pour un même pas dans le dispositif entraîneur (4) et les courroies d'entraînement (2a, 2b) en révolution, les protubérances (8a) et/ou les évidements (8b) des courroies d'entraînement (2a, 2b) en révolution, dans la zone des tronçons de traction (3a, 3b) mutuellement en regard, sont maintenus en prise par complémentarité de formes, par l'intermédiaire de la force magnétique, avec les protubérances (9a) et/ou les évidements (9b) du dispositif entraîneur (4).

10. Dispositif de transport selon l'une au moins des revendications 7 à 9, **caractérisé en ce que** les protubérances (8a) des courroies d'entraînement (2a, 2b) sont en contact réciproque, lorsque celles-ci sont maintenues en prise par complémentarité de formes avec les protubérances (9a) et/ou les évidements (9b) du dispositif entraîneur (4), ou bien les protubérances (8a) de l'une des courroies d'entraînement (2a, 2b) sont en prise avec les évidements de l'autre courroie d'entraînement (2a, 2b), lorsque celles-ci sont maintenues en prise par complémentarité de formes avec les protubérances (9a) et/ou les évidements (9b) du dispositif entraîneur (4).

11. Dispositif de transport selon l'une au moins des revendications 6 à 10, **caractérisé en ce que** l'une des courroies d'entraînement (2a, 2b) présente un dispositif d'aimant (6a, 6b, 7a, 7b) en révolution, et la courroie d'entraînement (2a, 2b) mutuellement en regard est attirée par le dispositif d'aimant (6a, 6b, 7a, 7b) en révolution, les protubérances (8a) et/ou les évidements (8b) de la courroie d'entraînement (2a, 2b) en révolution s'étendant le long du dispositif d'aimant (6a, 6b, 7a, 7b) en révolution, ou bien les deux courroies d'entraînement (2a, 2b) présentent un dispositif d'aimant (6a, 6b, 7a, 7b) en révolution présentant une polarité opposée dans la zone des tronçons de traction, et les courroies d'entraînement (2a, 2b) mutuellement en regard sont attirées par le dispositif d'aimant (6a, 6b, 7a, 7b) en révolution, dans la zone des tronçons de traction (3a, 3b), les protubérances (8a) et/ou les évidements (8b) de la courroie d'entraînement (2a, 2b) en révolution s'étendant le long du dispositif d'aimant (6a, 6b, 7a, 7b) en révolution.

12. Dispositif de transport selon la revendication 11, **caractérisé en ce que** le dispositif d'aimant en révolution présente une pluralité d'aimants (7a, 7b) dans les protubérances (8a) et/ou les évidements (8b), et la courroie d'entraînement (2a, 2b) est attirée par les aimants (7a, 7b), ou bien les deux courroies d'entraînement (2a, 2b) présentent une pluralité d'aimants (7a, 7b) dans les protubérances (8a) et/ou les évidements (8b), et les aimants (7a, 7b) sont agencés dans les courroies d'entraînement (2a, 2b) avec une polarité opposée, la force magnétique pressant les tronçons de traction (3a, 3b) l'un contre l'autre.

13. Dispositif de transport selon la revendication 12, **caractérisé en ce que** les aimants (7a, 7b) sont agencés dans les protubérances (8a) des courroies d'entraînement (2a, 2b) respectives, avec une polarité de même sens, les aimants (7a, 7b) étant agencés respectivement avec une polarité opposée dans les courroies d'entraînement (2a, 2b) mutuellement en regard, ou bien les aimants (7a, 7b) sont agencés dans les protubérances (8a) des courroies d'entraînement (2a, 2b) respectives, avec une polarité opposée, les courroies d'entraînement (2a, 2b) mutuellement en regard étant agencées, avec les protubérances (8a), de manière telle, que dans la zone des tronçons de traction (3a, 3b), les aimants (7a, 7b) soient agencés avec une polarité mutuellement opposée.

14. Dispositif de transport selon l'une au moins des revendications 3 à 5 ou 11 à 13, **caractérisé en ce que** les aimants (6a, 6b; 7a, 7b) sont réalisés en tant qu'aimants permanents et/ou en tant qu'électroaimants.

15. Dispositif de transport selon l'une au moins des revendications 1 à 14, **caractérisé en ce que** chacune des courroies d'entraînement (2a, 2b) s'enroule autour d'une roue d'entraînement (10a, 1b) et d'une roue de guidage (11a, 11b), notamment **en ce que** les courroies d'entraînement (2a, 2b) sont réalisées en tant que courroies crantées, et **en ce que** la roue d'entraînement (10a, 10b) est réalisée en tant que roue dentée d'entraînement et la roue de guidage (11a, 11b) en tant que roue dentée de guidage, et/ou **en ce que** de préférence les courroies d'entraînement et/ou le dispositif entraîneur sont magnétiques ou magnétisables, et de préférence renferment du fer.
